# EUROPEAN PATENT APPLICATION

(11) **EP 4 498 182 A1**
(43) Date of publication of application: **29.01.2025**
(21) Application number: 23187143.5
(22) Date of filing: 24.07.2023
(51) Int. Cl.: G05B 13/02

(54) **METHOD FOR TRAINING AN ARTIFICIAL INTELLIGENCE TO CONTROL A CONTROL LOOP OF A CONTROL DEVICE FOR A PROCESS, METHOD FOR OPERATING A CONTROL DEVICE WITH A TRAINED ARTIFICIAL INTELLIGENCE, COMPUTER PROGRAM PRODUCT, COMPUTER-READABLE STORAGE MEDIUM, ELECTRONIC COMPUTING DEVICE, AND CONTROL DEVICE**

(71) Applicant: Siemens Aktiengesellschaft, 80333 München (DE)
(72) Inventor: Hein, Daniel, 81549 München (DE); Rowedder, Jannick, 22767 Hamburg (DE); Strixner, Ferdinand, 81739 München (DE); Tokic, Michel, 88069 Tettnang (DE); von Beuningen, Anja, 99085 Erfurt (DE)
(74) Representative: Siemens Patent Attorneys

(57) **Abstract**

The invention relates to a 1. A method for training an artificial intelligence (30) to control a control loop (22) of a control device (10) for a process (12), comprising the steps of: providing a target value (20) for the process (12) by an electronic computing device (42); providing sensor data from a sensor (14) of the control device (10) by the electronic computing device (42); providing actuator data of an actuator (16) of the control device (10) for influencing the process (12) by the electronic computing device (42);
- generating training data (44) for the artificial intelligence (30) as a function of the target value (20), the sensor data, and the actuator data by the electronic computing device (42); and training the artificial intelligence (30) using the generated training data (44).

## Description

The invention relates to a method for training an artificial intelligence to control a control loop of a control device for a process. Furthermore, the invention relates to a method of operating a control device for controlling a process using an artificial intelligence which is trained according to the preceding aspect. Furthermore, the invention relates to a computer program product comprising program code means for an electronic computing device, a computer-readable storage medium, an electronic computing device for teaching an artificial intelligence, an electronic computing device having a taught artificial intelligence, and a control device.

During process optimization, process controllers must be set up and parameterized in various process steps, for example process reactors, drying plants or the like. This parameterization can be done either offline before commissioning or online during commissioning. Offline parameterization is based on process knowledge and/or previously collected process data. Here, the dependencies between controller actuators and process variables are either explicitly contained in the process knowledge, in particular so-called first-principle models or simulations, or implicitly contained in the recorded data.

The design of control systems requires time and parameter invariant controlled systems, which are often not given in practice, especially in discontinuous production plants. The dynamic behavior of controlled systems during operation is usually dynamic or fundamentally different. In order to be able to fulfill the defined quality criteria nevertheless, either a robust controller design must be chosen, by which a wide operating range is covered, but this often works to the disadvantage of the control again, or the control parameters must be adapted to the time and/or parameter invariant controlled system behavior. In the case of large parameter changes, adaptive control systems are used to adapt the control parameters to the existing controlled system conditions.

Online commissioning is time- and resource-intensive, since, for example, step tests to identify the transfer function of the controlled system have to be repeated at the operating points of the controller. The operating points of the controller are largely determined by process parameters, such as the composition of substances in chemical reactors or the filling level. Due to the complex process identification, adaptive control systems are not widely used.

Methods from artificial intelligence research are particularly suitable for automatically learning optimal control strategies from dependencies implicitly contained in the data. For this reason, AI (artificial intelligence) methods are already being successfully used to learn process controllers. The big breakthrough in these approaches has so far failed to materialize, as classical controllers of lower complexity are preferred, especially in the conservative process industry. The opinion of many process managers is that the manageable number of, for example, PID controllers (proportional-integral-differential controllers) and their easily readable dependencies are more trustworthy than complex automatically learned neural networks from AI research. The latter are often only visible to the outside world as a black box.

The object of the present invention is to provide a method for teaching an artificial intelligence, the use of the artificial intelligence, a computer program product, a computer-readable storage medium, an electronic computing device for teaching the artificial intelligence, an electronic computing device for a control device, and a control device, by means of which improved control of a process can be performed.

This object is solved by methods, a computer program product, a computer-readable storage medium, electronic computing devices, and a control device according to the independent claims. Advantageous embodiments are indicated in the subclaims.

A first aspect of the invention relates to a method for training an artificial intelligence to control a control loop of a control device for a process. A target value for the process is provided by means of an electronic computing device. Sensor data of a sensor of the control device is provided by means of the electronic computing device. Actuator data of an actuator of the control device for influencing the process is provided by means of the electronic computing device. Training data for the artificial intelligence is generated depending on the target value, the sensor data, and the actuator data by means of the electronic computing device, and the artificial intelligence is trained by means of the generated training data.

In particular, the artificial intelligence is used to later provide control in the control loop of the control device itself.

In particular, by appropriately teaching the artificial intelligence about the sensor data, actuator data, and target value data, the artificial intelligence can be reliably taught.

In particular, it can be provided that if a simulation of the process or a first-principle model of the process is available, the artificial intelligence can be trained online. In this approach, the classical controller, in particular the control loop, remains part of the simulation and the actions of the artificial intelligence correspond directly to the corresponding controller parameters of the control loop. This makes it possible to reliably train the artificial intelligence accordingly.

In an advantageous embodiment, it can be provided that the control loop data of the control loop is additionally provided and the artificial intelligence is trained as a function of the control loop data. In particular, an offline training of the artificial intelligence can thus be provided. Here, for example, the classical control loop can be comodulated as part of the learning process in order to encode the correct signals of the control device already during learning. This means that the actions in the space of the actuators, for example a valve setting, motor speed or the like, are available from the data set and the learning algorithm learns that only actions are possible which are possible by the classical control loop by adjusting the control parameters. Thus, the artificial intelligence can be reliably learned.

Furthermore, it has proven advantageous that the artificial intelligence is learned by means of reinforcement learning. Reinforcement learning is a form of machine learning by which a computer learns to perform the task through repeated trial and error interactions with a dynamic environment. Specifically, the artificial intelligence thus independently learns a strategy to maximize adaptation accordingly. In turn, the artificial intelligence is not shown which actions of which situation are the best, but is given a corresponding "reward", which may be negative, by interacting with the control device or process at certain times. Thus, the artificial intelligence can be reliably taught.

It has further proven advantageous if the sensor data and/or the actuator data are provided on the basis of jump tests. In particular, the generated data can thus be used by jump tests to train the artificial intelligence with the aid of, for example, offline reinforcement learning. Here, a classical setup, such as fixed parameters determined from jump tests, can be started. These can then also be easily modified during operation within safe operating limits and can be slightly modified to find training data on potentially even better operating points and to be able to learn further dependencies between the control parameters of the control loop and the system behavior that can be influenced by them. This exploration can be done, for example, by using neural networks to target areas where little data is available so far or where there is high model uncertainty. This approach can optionally also be used for continuous improvement and adaptation to changing system behavior, for example on the basis of aging phenomena of a process plant.

A second aspect of the invention relates to a method for operating a control device for controlling a process, using an artificial intelligence that is learned according to the preceding aspect.

In particular, to increase the acceptance of control devices that work by means of artificial intelligence, the classical control loop is not removed from the controlled system, but remains the last link before the process itself. This ensures that familiar control strategies are run that are accepted by the process expert. However, to achieve an improvement in control performance, the classically non-variable controller parameters are designed to be adaptable at runtime. The artificial intelligence then has the possibility, although not directly controlling the actuators, to indirectly influence the process flow by adjusting the controller parameters. In this way, process control can be operated reliably.

A further advantageous embodiment provides that a control parameter of the control loop is set by means of the artificial intelligence. As already mentioned, the artificial intelligence does not directly influence the actuator itself, but merely regulates the control parameter of the control loop. For example, corresponding weights within the control loop can be set as control parameters. Thus, the actuator is not directly accessed, but the artificial intelligence merely regulates the control parameter of the control loop. This can increase the acceptance of AI-based control.

It is also advantageous if control parameters of a control loop designed as a PID controller are set by means of artificial intelligence. In particular, for example, the output of the PID controller then in turn determines the manipulated variables of the process actuators. The controller classically generates its output from the input variables from the process sensors and the planned setpoint to be achieved, in particular the target value. The governing parameters in the controller, in particular, for example, the factors of the PID components (proportional/integral and differential components), in turn transform the signal of the deviation from the target value into the signal of the manipulated variable to be changed. Thus, artificial intelligence can also be reliably used in already existing systems with PID controllers, whereby improved process reliability can be realized.

In another advantageous embodiment, a control variable of the actuator is set by means of the control loop. In particular, it is now envisaged that the control variable of the actuator is also set by means of the control loop. In turn, the control parameters of the control loop can be set via the artificial intelligence. Thus, the acceptance for artificial intelligence-based control can be increased.

It is further advantageous if additionally at least one external process parameter is detected by means of a detection device and the external process parameter is taken into account by the artificial intelligence. In this case, the detection device can be designed as part of the control device. Furthermore, the detection device may also be formed as part of a system in the process. In particular, it can be provided, for example, that the control parameters of the classical controller are modified by the artificial intelligence in such a way that the process control results from the classical controller can be improved. In this context, the artificial intelligence can access, among other things, information from the running process, in particular from the sensors, the desired target value and external measured process parameters, in particular, for example, outside temperature, humidity or the state of neighboring plants or the like. In this way, it can respond to a variety of situations without fundamentally changing the calculation of the control variables at the actuators of the process.

Also advantageous is when the artificial intelligence is provided as a neural network. For example, the artificial intelligence can be provided as a convolutional neural network. In particular, this makes it possible to perform closed-loop control in a simple manner.

In particular, the method presented is a computer-implemented method. Therefore, a further aspect of the invention relates to a computer program product comprising program code means for causing an electronic computing device to perform a method according to the first aspect of the invention and/or a method according to the second aspect of the invention when the program code means are processed by the electronic computing device. For example, a first computer program product may be provided that is adapted to train the artificial intelligence. There may further be provided a second computer program product adapted to perform the control using the artificial intelligence. The two computer program products can then be processed on different computing instances, in particular different electronic computing devices, or on the same electronic computing device.

Furthermore, the invention relates to a computer-readable storage medium with the computer program product according to the preceding aspect. In this regard, two different computer-readable storage media may also be provided, one with the computer program product for performing a method according to the first aspect of the invention and another computer-readable storage medium with the computer program product according to the second aspect of the invention.

A still further aspect of the invention relates to an electronic computing device for teaching an artificial intelligence, wherein the electronic computing device is adapted to perform a method according to the first aspect of the invention. Here, for example, the electronic computing device may comprise the computer program product for teaching the artificial intelligence.

Furthermore, the invention also relates to an electronic computing device having a learned artificial intelligence according to the first aspect of the invention, wherein the electronic computing device is adapted to perform a method according to the second aspect of the invention. For this purpose, for example, the electronic computing device may comprise the second computer program product for applying the artificial intelligence or for controlling.

A still further aspect of the invention relates to a control device for controlling a process, comprising at least one sensor, one actuator, one control loop and comprising an electronic computing device according to the preceding aspect.

Advantageous embodiments of the method according to the first aspect are to be regarded as advantageous embodiments for the electronic computing device according to the first aspect. Advantageous embodiments according to the second aspect of the invention are to be regarded as advantageous embodiments for the electronic computing device according to the second aspect. Furthermore, advantageous embodiments of the electronic computing device according to the second aspect are also applicable to the control device.

An artificial intelligence/neural network can be understood as a software code or a compilation of several software code components, wherein the software code may comprise several software modules for different functions, for example one or more encoder modules and one or more decoder modules.

An artificial neural network can be understood as a nonlinear model or algorithm that maps an input to an output, wherein the input is given by an input feature vector or an input sequence and the output may be an output category for a classification task or a predicted sequence.

For example, the artificial neural network may be provided in a computer-readable way, for example, stored on a storage medium of the vehicle, in particular of the at least one computing unit.

The neural network comprises several modules including the encoder module and the at least one decoder module. These modules may be understood as software modules or respective parts of the neural network. A software module may be understood as software code functionally connected and combined to a unit. A software module may comprise or implement several processing steps and/or data structures.

The modules may, in particular, represent neural networks or sub-networks themselves. If not stated otherwise, a module of the neural network may be understood as a trainable and, in particular, trained module of the neural network. For example, the neural network and thus all of its trainable modules may be trained in an end-to-end fashion before the method is carried out. However, in other implementations, different modules may be trained or pre-trained individually. In other words, the method according to the invention corresponds to a deployment phase of the neural network.

A computing unit/electronic computing device may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

For use cases or use situations which may arise in a method according to the invention and which are not explicitly described herein, it may be provided that, in accordance with the method, an error message and/or a prompt for user feedback is output and/or a default setting and/or a predetermined initial state is set.

Regardless of the grammatical gender of a particular term, persons with male, female, or other gender identity are included.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features, which go beyond or deviate from the combinations of features set forth in the recitations of the claims may be comprised by the invention.

Therefore:
- FIG 1: shows a schematic block diagram according to one embodiment of a control device for a process;
- FIG 2: shows another schematic block diagram according to one embodiment of a control device; and
- FIG 3: shows another schematic block diagram according to an embodiment of a control device.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

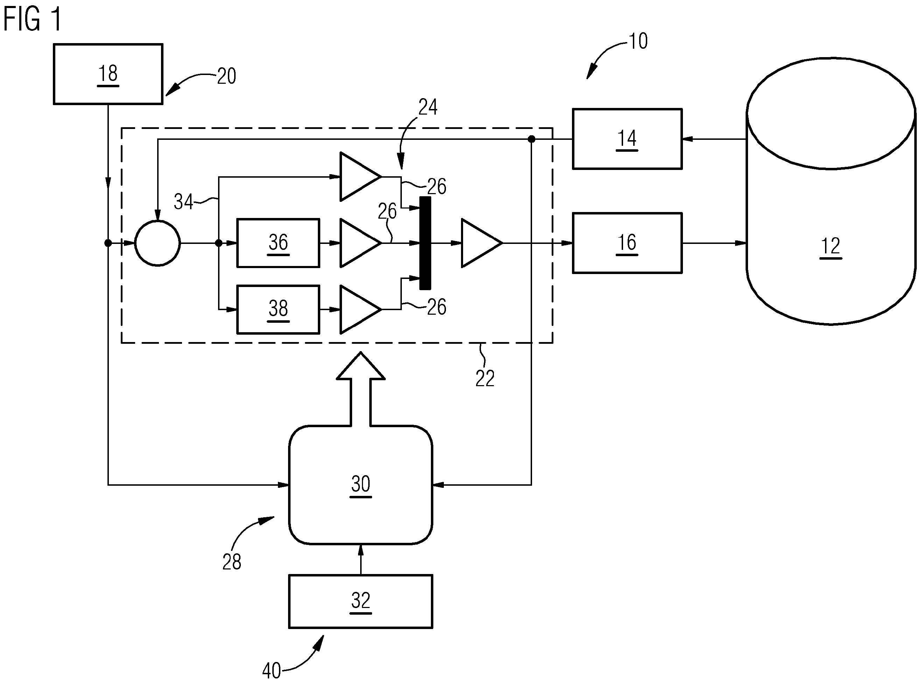

FIG 1 shows a schematic block diagram according to one embodiment of a control device 10 for a process 12. The process 12 may comprise, for example, a plant control system. The control device 10 comprises a sensor 14, by means of which measured values of the process 12 can be detected. Furthermore, the control device 10 comprises at least one actuator 16, based on which influence can be made on the process 12.

Furthermore, a memory device 18 is shown, for example, on which a target value 20 for the process 12 can be specified or stored.

The control device 10 further comprises a control loop 22. In the present embodiment, the control loop 22 is designed as a PID controller 24. For this purpose, it can be provided in particular that the control parameter 26 for the actuator 16 can be provided by means of the PID controller.

Furthermore, FIG 1 shows a second electronic computing device 28 having an artificial intelligence 30 that is appropriately learned, as further explained later. Furthermore, it can be further provided via a detection device 32 that external process parameters 40 can be taken into account by the artificial intelligence 30.

In particular, it may thus be envisaged, in order to increase the acceptance of controllers by means of the artificial intelligence 30, that the classical control loop 22 is not removed from the controlled system, but remains the last link before the process 12. In this way, it can be ensured that familiar control strategies are run which are accepted by the process expert. However, to simultaneously achieve an improvement in control performance, classically non-variable control parameters 26 are designed to be adaptable at runtime. The artificial intelligence 30 then has the possibility, although not directly adjusting the control variables of the actuator 16 or the actuators, to nevertheless indirectly influence the process sequence by adjusting the control parameters 26.

As shown in FIG 1, the output of the classical control loop 22 alone, here exemplarily shown at the PID controller 24, determines the control variables of the actuator 16. The control loop 22 classically generates its output at the input variables from the sensor 14, whereby in particular also several sensors can be formed, and according to the achieved setpoint, which is given in particular by the target value 20 in the present case. The determining parameters in the controller, here in particular the factors of the PID components with proportional component 34, integral component 36 and differential component 38 transform the signal of the deviation from the target value 20 in the signal value changed control variable.

In this case, the parameters of the classical control loop 22 are modified by the artificial intelligence 30 in such a way that an advantageous process control results from the classical control loop 22. Among other things, the artificial intelligence 30 can make use of information from the ongoing process, in particular the sensor 14, the desired target value 20 and external measured variables, in particular the external process parameters 32, such as outside temperature, humidity and the state of neighboring plants. In this way, it can respond to a variety of situations without fundamentally changing the calculation of the control variables at the actuator 16 of the process 12.

In other words, the FIG 1 shows a method of operating the control device 10 to control the process 12 using the artificial intelligence 30. In this regard, it may be provided that the control parameter 26 of the control loop 22 is set by means of the artificial intelligence 30. Furthermore, the control parameter 26 of the control loop 22 configured as a PID controller 24 may be adjusted by means of the artificial intelligence 30. Furthermore, the control variable of the actuator 16 can be adjusted by means of the control loop 22. Additionally, it may be provided that at least one external process parameter 40 is detected by means of the detection device 32 and the external process parameter 40 is taken into account by the artificial intelligence 30. Furthermore, control loop data 46 may be taken into consideration.

Furthermore, it may be provided that the artificial intelligence 30 is provided as a neural network.

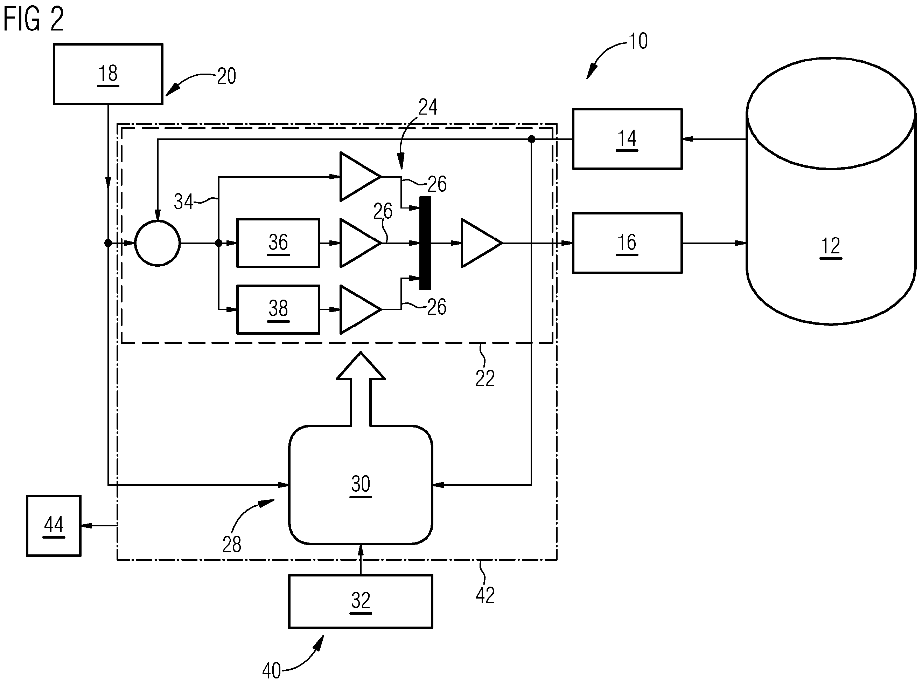

FIG 2 shows a schematic view of the control device 10 of FIG 1. In particular, a teaching process or training process for the artificial intelligence 30 is proposed herein. In particular, it is shown herein that a first electronic computing device 42 is provided for teaching the artificial intelligence 30.

In particular, FIG 1 thus shows a method for training the artificial intelligence 30. The target value 20 for the process 12 is provided by means of the first electronic computing device 42. Sensor data of the sensor 14 of the control device 10 is provided by means of the electronic computing device 42. Actuator data of the actuator 16 of the control device 10 for influencing the process 12 is provided by means of the electronic computing device 42. Training data 44 for the artificial intelligence 30 is generated as a function of the target value 20, the sensor data and the actuator data by means of the electronic computing device 42. The artificial intelligence 30 is trained by means of the generated training data 44. In particular, it may be provided that by means of reinforcement learning the artificial intelligence 30 is trained. Furthermore, it may be provided that the sensor data and/or the actuator data are provided on the basis of jump tests.

In particular, it may thus be envisaged that data generated by jump tests can be used to train the artificial intelligence 30 using a so-called offline reinforcement methods, as shown in FIG 2. Here, the control loop 22 can be used as part of the reinforcement learning policy to provide the correct signals from the system while it is still learning. This means that the actions of the policy are in the space of the actuators 16, for example a valve position or motor speed, from the data set and the learning algorithm learns directly that only actions are possible which are possible by the classical control loop 22 by adjusting the control parameters 26. Inputs in this learning to generate the training data 44 are in particular the target value 20, the sensor data as well as external process parameters possible. The outputs are in particular the control of the actuator 16. It can be started with the classical setup, such as fixed parameters determined from jump tests. These can then be slightly modified exploratively during operation within safe operating means in order to find training data 44 on potentially even better operating points and to be able to learn further dependencies between the parameters of the PID controller 24 and the system behavior that can be influenced thereby. This exploration can be done, for example, by using neural networks to specifically target areas where little data is available so far or where there is a high model uncertainty. This approach can optionally also be used for continuous improvements and adaptation to changing system behavior, for example due to aging phenomena in the process 12.

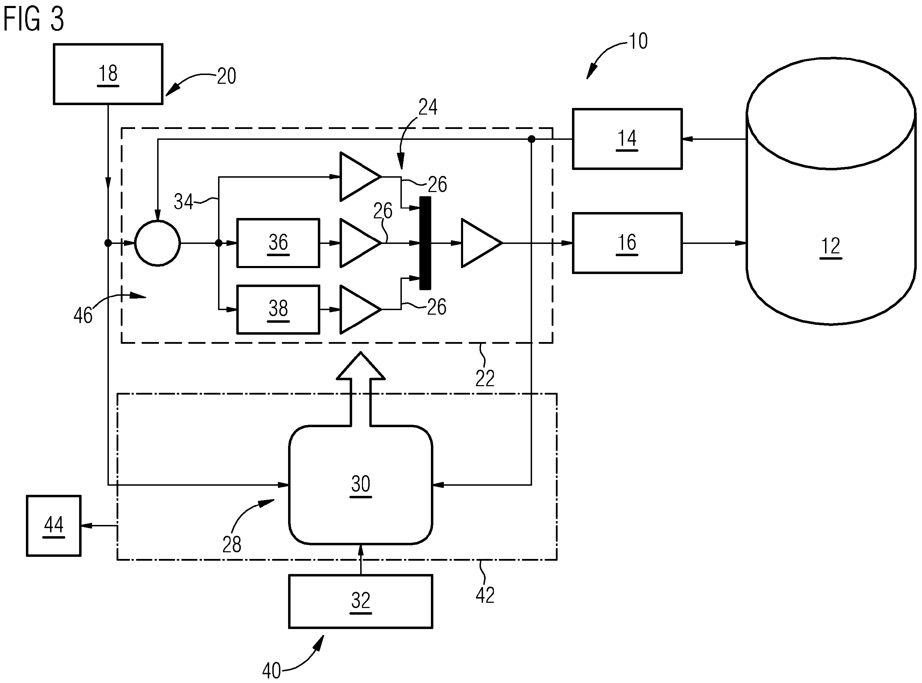

FIG 3 shows a further schematic view of an embodiment of the control device 10, in particular also for teaching the artificial intelligence 30. In the present embodiment example, it is shown in particular that the input variables are the sensor data and the target value 20. As output variables, in particular, the control parameters 16 are influenced. In particular, FIG 3 thus shows, for example, should simulation or a first-principle model be available, the artificial intelligence 30 can also be trained in online reinforcement learning. In this approach, the control loop 22 remains part of the simulation and the actions of the policy correspond directly to the control parameters 26.

Overall, the invention, which is illustrated in FIG 1 to 3, shows the advantages of having a higher control quality, since otherwise fixed parameters can be adjusted at runtime. In particular, the control quality is to be emphasized compared to the classical control loops 22. Furthermore, a high acceptance of the process operators for the new control strategy can be provided, since known classical control loops 22 can still be used.

## Claims

1. A method for training an artificial intelligence (30) to control a control loop (22) of a control device (10) for a process (12), comprising the steps of:
- providing a target value (20) for the process (12) by an electronic computing device (42);
- providing sensor data from a sensor (14) of the control device (10) by the electronic computing device (42);
- providing actuator data of an actuator (16) of the control device (10) for influencing the process (12) by the electronic computing device (42);
- generating training data (44) for the artificial intelligence (30) as a function of the target value (20), the sensor data, and the actuator data by the electronic computing device (42); and
- training the artificial intelligence (30) using the generated training data (44).

2. A method according to claim 1, **characterized in that** control loop data (46) of the control loop (22) are additionally provided, and the artificial intelligence (30) is trained depending on the control loop data (46).

3. A method according to claim 1 or 2, **characterized in that** the artificial intelligence (30) is learned by reinforcement learning.

4. A method according to any one of the preceding claims, **characterized in that**
based on jump tests, the sensor data and/or the actuator data are provided.

5. A method for operating a control device (10) for controlling a process (12) using an artificial intelligence (30) learned according to any one of claims 1 to 4.

6. A method according to claim 5, **characterized in that** a control parameter (26) of the control loop (22) is set by the artificial intelligence (30).

7. A method according to one of claims 5 or 6, **characterized in that**
a control parameter (26) of a control loop (22) configured as a PID controller (44) is adjusted by the artificial intelligence (30).

8. A method according to any one of claims 5 to 7, **characterized in that**
a control variable of the actuator (16) is set by the control loop (22).

9. A method according to any one of claims 5 to 8, **characterized in that**
additionally at least one external process parameter (40) is detected by a detection device (32) and the external process parameter (40) is taken into consideration by the artificial intelligence (30).

10. A method according to any one of claims 5 to 9, **characterized in that**
the artificial intelligence (30) is provided as a neural network.

11. A computer program product comprising program code means for causing an electronic computing device (28, 42) to perform a method according to any one of claims 1 to 4 and/or according to any one of claims 5 to 10 when the program code means is processed by the electronic computing device (28, 42) .

12. A computer-readable storage medium comprising a computer program product according to claim 11.

13. An electronic computing device (42) for teaching an artificial intelligence (30), wherein the electronic computing device (42) is configured for pereforming a method according to any one of claims 1 to 4.

14. An electronic computing device (28) comprising a learned artificial intelligence (30) according to any one of claims 1 to 4, wherein the electronic computing device (28) is configured for performing a method according to any one of claims 5 to 10.

15. A control device (10) for controlling a process (12), comprising at least one sensor (14), one actuator (16), one control loop (22) and one electronic computing device (28) according to claim 14.
